# EUROPEAN PATENT APPLICATION

(11) **EP 3 346 101 A1**
(43) Date of publication of application: **11.07.2018**
(21) Application number: 17205005.6
(22) Date of filing: 01.12.2017
(51) Int. Cl.: F01K 1/18, F01K 7/02, F01K 23/10, F01K 3/00, F01K 3/04, F01K 3/26, F01K 7/26

(54) **STEAM TURBINE WITH STEAM STORAGE SYSTEM**

(30) Priority: 28.12.2016 US 201615392703
(71) Applicant: General Electric Company, Schenectady, NY 12345 (US)
(72) Inventor: KIRCHNER, Julia Maria, 68309 Mannheim, Baden-Wuerttemberg (DE); CUCHE, Theres, 5401 Baden, AG (CH); MORRIS, Kevin, Dublin, D07V0P0 IE (IE)
(74) Representative: Foster, Christopher Michael

(57) **Abstract**

A steam turbine system (14, 200) including a steam source for generating a steam flow, a high-pressure turbine (16, 206) providing a first steam exhaust (208), a low-pressure turbine (18, 210) fluidly coupled to the high-pressure turbine (206), and, a steam storage system (212) having an inlet (216) for receiving a portion (214) of the first steam exhaust (208) from the high-pressure steam turbine (16, 206) and storing in the steam storage system (212), the steam storage system (212) having an output with a pressure relief valve for discharging a second steam exhaust (222) to the low-pressure turbine (18, 210).

## Description

### BACKGROUND OF THE INVENTION

The disclosure relates generally to steam turbine systems, and more particularly, to a steam turbine system with a steam storage system.

In general, combined cycle power plants (CCPPs) operatively couple a gas turbine system with a steam turbine system in order to increase the plant's power output. Such plants' operating capacities are a function of their design specifications, and include certain limitations. One of these limitations is the combined cost and time involved in re-starting the CCPP after a shut down or interruption period.

### BRIEF DESCRIPTION OF THE INVENTION

A first aspect of the disclosure provides a steam turbine system including a steam source for generating a steam flow, a high pressure turbine providing a first steam exhaust, a low pressure turbine fluidly coupled to the high pressure turbine, and, a steam storage system having an inlet for receiving a portion of the first steam exhaust from the high pressure steam turbine and storing in the steam storage system, the steam storage system having an output with a pressure relief valve for discharging a second steam exhaust to the low pressure turbine.

A second aspect of the disclosure provides a power plant including a steam turbine system having a heat recovery steam generator (HRSG) for generating a steam flow, a high pressure turbine providing a first steam exhaust, a low pressure turbine fluidly coupled to the high pressure turbine, and a steam storage system having an inlet for receiving a portion of the first steam exhaust from the high pressure steam turbine and storing a storage steam, the steam storage system having an output with a pressure relief valve for discharging a second steam exhaust to the low pressure turbine.

A third aspect of the disclosure provides a method including feeding a first portion of an exhaust steam from a high pressure steam turbine to a steam storage system, and feeding a second portion of the steam to an HRSG, storing the first portion of the steam in the steam storage system, outputting, with a pressure relief valve, a steam flow from the steam storage system to a low pressure steam turbine, and, controlling the temperature of the exhaust steam from the storage by adding superheated steam from the first steam exhaust to discharge superheated steam to an LP steam turbine.

The illustrative aspects of the present disclosure are designed to solve the problems herein described and/or other problems not discussed.

### BRIEF DESCRIPTION OF THE DRAWINGS

These and other features of this disclosure will be more readily understood from the following detailed description of the various aspects of the disclosure taken in conjunction with the accompanying drawings that depict various embodiments of the disclosure, in which:
FIG. 1 is a schematic view of portions of an illustrative prior art combined cycle power generating system.
FIG. 2 is a perspective partial cut-away illustration of a prior art steam turbine system.
FIG. 3 is a schematic view of a combined cycle power plant integrating a steam storage system, according to embodiments of the disclosure.
FIG. 4 is a schematic view of a combined cycle power plant integrating a steam storage system and an extra desuperheater, according to embodiments of the disclosure.
FIG. 5 is a schematic view of a combined cycle power plant integrating a steam storage system and a heat exchanger, according to embodiments of the disclosure.

It is noted that the drawings of the disclosure are not to scale. The drawings are intended to depict only typical aspects of the disclosure, and therefore should not be considered as limiting the scope of the disclosure. In the drawings, like numbering represents like elements between the drawings.

### DETAILED DESCRIPTION OF THE INVENTION

As an initial matter, in order to clearly describe the current disclosure, it will become necessary to select certain terminology when referring to and describing relevant machine components within a steam turbine system. When doing this, if possible, common industry terminology will be used and employed in a manner consistent with its accepted meaning. Unless otherwise stated, such terminology should be given a broad interpretation consistent with the context of the present application and the scope of the appended claims. Those of ordinary skill in the art will appreciate that often a particular component may be referred to using several different or overlapping terms. What may be described herein as being a single part may include and be referenced in another context as consisting of multiple components. Alternatively, what may be described herein as including multiple components may be referred to elsewhere as a single part.

In addition, several descriptive terms may be used regularly herein, and it should prove helpful to define these terms at the onset of this section. These terms and their definitions, unless stated otherwise, are as follows. As used herein, "downstream" and "upstream" are terms that indicate a direction relative to the flow of a fluid, such as the working fluid through the turbine engine or, for example, the flow of air through the combustor or coolant through one of the turbine's component systems. The term "downstream" corresponds to the direction of flow of the fluid, and the term "upstream" refers to the direction opposite to the flow. The terms "forward" and "aft," without any further specificity, refer to directions, with "forward" referring to the front or compressor end of the engine, and "aft" referring to the rearward or turbine end of the engine. It is often required to describe parts that are at differing radial positions with regard to a center axis. The term "radial" refers to movement or position perpendicular to an axis. In cases such as this, if a first component resides closer to the axis than a second component, it will be stated herein that the first component is "radially inward" or "inboard" of the second component. If, on the other hand, the first component resides further from the axis than the second component, it may be stated herein that the first component is "radially outward" or "outboard" of the second component. The term "axial" refers to movement or position parallel to an axis. Finally, the term "circumferential" refers to movement or position around an axis. It will be appreciated that such terms may be applied in relation to the center axis of the turbine.

To extend the operating range of a power plant and increase its operating flexibility, it is possible to use storage devices that store thermal energy. One possibility of direct storage is to store hot water or steam within the water-steam cycle.

In general, embodiments of the present disclosure integrate saturated steam storage (sliding pressure storage) into a combined cycle power plant, and more specifically, into a water-steam cycle. With such storage, the amount of steam in the water-steam-cycle can be easily reduced in order to reduce the electrical power output, and the amount of steam can be increased to increase the electrical power generation.

In example embodiments, the steam storage system will be charged with steam from the cold reheat (CRH), or in other words, from the steam flow exiting a high pressure steam turbine (HP turbine), during times when the minimum operating load is reduced or when a short and quick load drop is required with the intention to return to the original load soon. Discharging the steam storage system adds stored steam from the steam storage system to the low pressure steam flow which is sent to a low pressure steam turbine (LP turbine). By increasing the mass flow through the LP turbine, more electricity is generated. Charging at any load leads to a reduced plant load while discharging at any load results in a plant load increase higher than the load would be originally. If, for example, only a GT load increase is desired but not plant load increase, the steam storage can be charged at any load and the gas turbine system operates at a slightly higher load point. It is also possible to operate the gas turbine system at a slightly lower load point if GT load reduction is desired but no plant load decrease while the steam storage is discharging.

In example embodiments, the steam storage system may include a storage tank. The maximum mass flow to and from the storage tank is limited by the combined cycle gas turbine design. The storage capacity is limited by the tank size. After a certain tank size, it does not make economical and technological sense to build the tank any bigger. In such a case, additional storage tanks may be added (not shown for clarity). This enables a customer flexibility to extend the storage capacity by just adding storage tanks and connecting them to the existing system. It would be possible to use a different type of thermal storage, for example one with phase-changing material to generate steam as well.

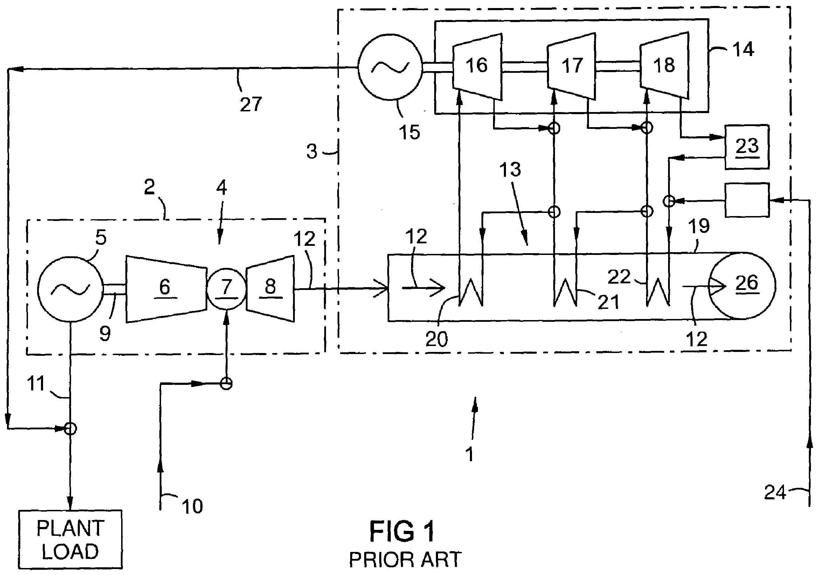

Referring to the drawings, in FIG. 1 a schematic view of portions of an illustrative prior art combined cycle power generating system as combined cycle power plant (CCPP) 1 are shown. Prior art CCPP 1 has gas cycle 2 and water/steam cycle 3. Gas cycle 2 has gas turbine system 4 operatively coupled to generator 5. Gas turbine system 4 includes compressor 6, combustor 7, and gas turbine 8 coupled to output shaft 9. In operation, air enters the inlet of compressor 6, is compressed and then discharged to combustor 7. A fuel flow 10 is provided to combustor 7 where fuel such as a gas, e.g., natural gas, or a fluid, e.g., oil, is burned to provide high energy combustion gases which drive gas turbine 8. In gas turbine 8, the energy of the hot gases is converted into work, some of which is used to drive compressor 6 through rotating shaft 9, with the remainder available for useful work to drive a load such as generator 5 via shaft 9 for producing electrical output 11.

FIG. 1 also represents the combined cycle in its simplest form in which the energy in exhaust gas 12 exiting gas turbine 8 is converted into additional useful work. Exhaust gas 12 enters heat recovery steam generator (HRSG) 13 in which water is converted to steam in the manner of a boiler.

Water/steam cycle 3 includes HRSG 13, steam turbine system 14, and generator 15. Steam turbine system 14 includes high pressure turbine (HP turbine) 16, intermediate pressure steam turbine (IP turbine) 17, and low pressure turbine (LP turbine) 18. HRSG 13 has gas duct 19 and heat exchangers 20, 21, 22 that transfer heat from gas turbine exhaust flow 12 to feed water from condenser 23 and external water source 24 to generate steam for powering steam turbine system 14. These heat exchangers heat incoming water pumped from external water source 24 and/or recovered from a condenser 23. Heat exchangers 20, 21, 22 may be mounted in the HRSG duct 19 such that a first stage of water heating occurs at the downstream end of the HRSG, and progressively hotter stages occur progressively upstream. Exhaust gas 12 cools as it flows over heat exchangers 20, 21, 22 and transfers heat to them, eventually exiting CCPP 1 via exhaust stack 26. Steam at different temperatures and pressures may be extracted at different points along the series of heat exchangers 20, 21, 22. Some of this steam may be routed to steam turbine system 14 driving a generator 15 for electrical output 27. Other portions of this steam may be routed to heat exchangers upstream in the HRSG 13 for additional heating to recover as much energy as possible from exhaust gas 12 and provide high pressure steam for the steam turbine system 14 and other uses. For example, the downstream heat exchanger 22 may provide low-pressure steam to LP turbine 18, and/or it may provide low-pressure steam or hot water to another exchanger 21.

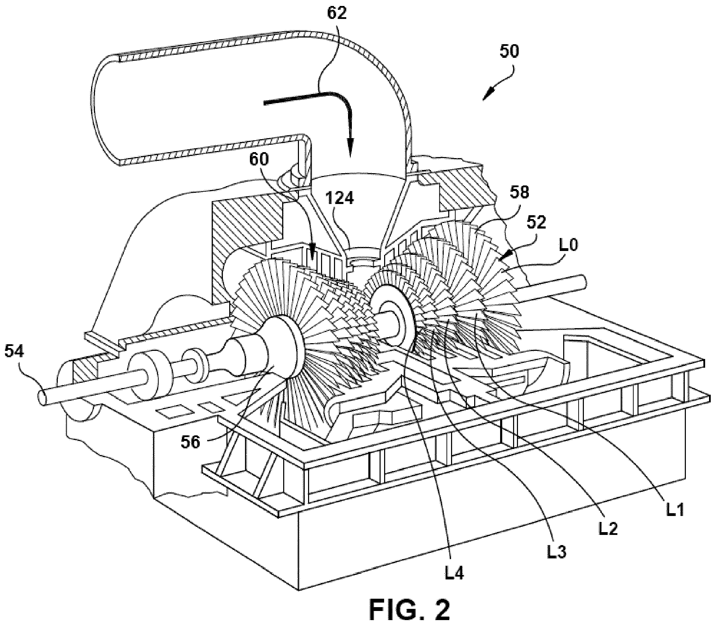

FIG. 2 shows a perspective partial cut-away illustration of a prior art steam turbine 50. Steam turbine 50 includes a rotor 52 that includes a rotating shaft 54 and a plurality of axially spaced rotor wheels 56. A plurality of rotating blades 58 are mechanically coupled to each rotor wheel 56. More specifically, blades 58 are arranged in rows that extend circumferentially around each rotor wheel 56. A plurality of stationary vanes 60 extends circumferentially around shaft 54, and the vanes are axially positioned between adjacent rows of blades 58. Stationary vanes 60 cooperate with blades 58 to form a stage and to define a portion of a steam flow path through turbine 50.

In operation, steam 62 enters an inlet 124 of turbine 50 and is channeled through stationary vanes 60. Vanes 60 direct steam 62 downstream against blades 58. Steam 62 passes through the remaining stages imparting a force on blades 58 causing shaft 54 to rotate. At least one end of turbine 50 may extend axially away from rotor 52 and may be attached to a load or machinery (not shown) such as, but not limited to, a generator, and/or another turbine.

As an example, turbine 50 comprises five stages. The five stages are referred to as L0, L1, L2, L3 and L4. Stage L4 is the first stage and is the smallest (in a radial direction) of the five stages. Stage L3 is the second stage and is the next stage in an axial direction. Stage L2 is the third stage and is shown in the middle of the five stages. Stage L1 is the fourth and next-to-last stage. Stage L0 is the last stage and is the largest (in a radial direction). It is to be understood that five stages are shown as one example only, and each turbine may have more or less than five stages.

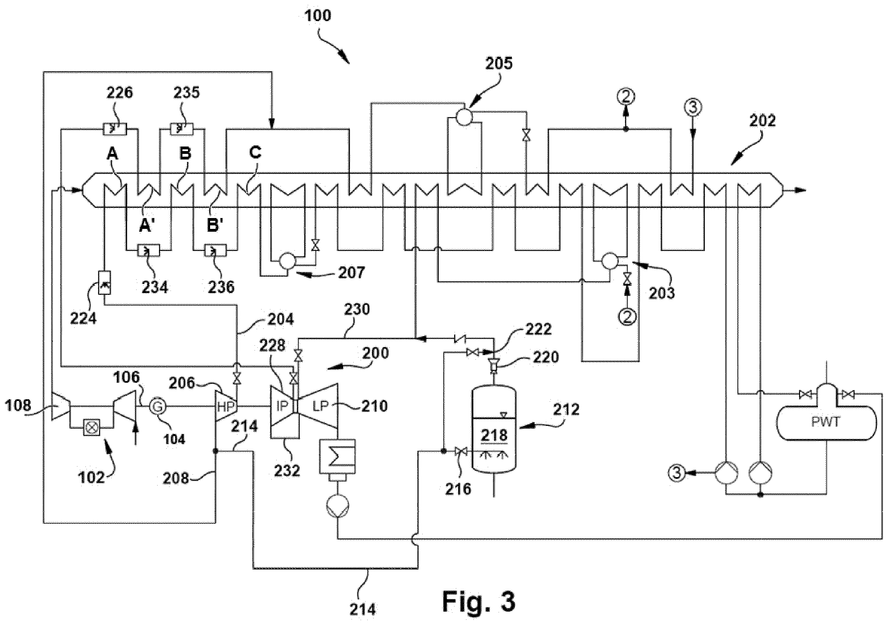

Referring now to FIG. 3, a schematic view of CCPP 100 integrating steam storage system 212, according to embodiments of the disclosure is shown. In an example embodiment, CCPP 100 may include gas turbine system 102 operably connected to generator 104 as is known in the art, and steam turbine system 200 operably coupled to generator 104 and/or another generator (not shown). Steam turbine system 200 may include HP turbine 206, IP turbine 228, and LP turbine 210. In the exemplary embodiment shown, one gas turbine system 102 is shown with HRSG 202 feeding steam to steam turbine system 200. However, it should be appreciated that aspects of the present disclosure can be implemented into power plants with configurations having multiple gas turbines together with their HRSG feeding steam to steam turbine system 200, or multiple gas turbines together with their HRSG feeding steam to multiple steam turbine systems. Further, in the example embodiment shown in FIG. 3, CCPP 100 is a single shaft system with one generator 104, but one with skill in the art will readily understand that the teachings of the disclosure are applicable to any variety of CCPP configurations. For example, in a multi-shaft arrangement, drive shaft 106 can be driven by gas turbine 108 of gas turbine system 102 and the steam produced by HRSG 202 drives at least part of steam turbine system 200 which drives a separate shaft (not shown) and an additional load such as a second generator (not shown), which in turn, produces additional electric power. If there is more than one gas turbine, each gas turbine may drive their own drive shaft and a respective generator. As such, in some configurations, turbines 108, 206, 228, and 210 drive common generator 104, but more than one generator may be provided.

CCPP 100 has heat exchanger 202 that, in an example embodiment, may be HRSG 202. In the embodiment shown in FIG. 3, HRSG 202 may include LP system 203, IP system 205, and HP system 207. LP, IP and HP systems 203, 205 and 207, respectively, of HRSG 202 generally include a drum and a plurality of heat exchangers. In example embodiments, systems 203, 205 and 207 of HRSG 202 may include several elements, such as a preheater, a drum, an evaporator, and a superheater. In operation, steam from HRSG 202 enters an inlet of HP turbine 206, IP turbine 228 and/or LP turbine 210, and is channeled to impart a force on blades thereof (not shown) causing their common shaft to rotate. As understood, steam from an upstream turbine may be employed later in a downstream turbine. The steam thus produced by HRSG 202 drives at least a part of steam turbine system 200 in which additional work is extracted to drive shaft 106.

In an example embodiment, steam turbine system 200 includes IP turbine 228 fluidly coupled to HP turbine 206 and LP turbine 210. IP turbine 228 is fed from a reheat system of HRSG 202, and the IP turbine provides an exhaust 232 that feeds into LP turbine 210. Steam 230 is additional steam coming from LP system 203 of HRSG 202 and is mixed with IP exhaust 232. Steam 230 and exhaust 232 are both sent to LP turbine 210.

CCPP 100 includes HRSG 202 for generating a steam exhaust 204 feeding into HP turbine 206. In turn, HP turbine 206 provides a first steam exhaust 208 that fluidly couples HP turbine 206 to an LP turbine 210. In an example embodiment, first steam exhaust 208 fluidly couples HP turbine 206 to LP turbine 210 via HRSG 202 and IP turbine 228. A steam storage system 212 is operatively arranged between HP turbine 206 and LP turbine 210.

Storage system 212 may include a storage tank or a drum or any suitable storage unit, or any plurality or combination of such units. The storage system has a charging mode and a discharging mode of operation.

During the charging mode, storage system 212 receives a portion 214 of first steam exhaust 208 from HP turbine 206 via an inlet valve 216. Portion 214 is stored within storage system 212 as a stored steam 218. In an embodiment, the water level in storage system 212 rises and the pressure increases. The water level and the pressure increases until stored steam 218 has a pressure that equals the pressure of first steam exhaust 208. At that point, the water level and the pressure in steam storage system 212 are at their highest points and the charging of storage system 212 has reached its limit. At this storage limit, there is steam and water inside storage system 212, and as such, the temperature equals the saturation temperature of the given pressure.

During the discharging mode, storage system 212 releases a second steam exhaust 222 via output valve 220. In an example embodiment, second steam exhaust 222 is saturated steam and output valve 220 is a pressure-control valve so that saturated steam 222 is released at a constant pressure to LP turbine 210. The water level and the pressure within steam storage system 212 decreases during the discharging mode. When extracting steam 222 from storage system 212, water within storage system 212 evaporates to maintain the equilibrium within the storage tank, thus leading to a pressure reduction within the tank. To provide a fixed pressure output from steam storage system 212, pressure control valve 220 is configured at the steam outlet in order to maintain a certain pressure downstream of the valve. In an example embodiment, the steam at the storage outlet, i.e., control valve 220, is at saturated conditions.

Saturated steam exhaust 222 can be superheated by adding superheated steam downstream from pressure control valve 220. In an example embodiment, first steam exhaust 208 is used for superheating because this steam is already available at storage system 212. However, it should be appreciated that it can be any steam source with suitable parameters.

Typically, overheating problems occur when the exit temperature from HRSG 202 reaches about 600° C, however this temperature limit depends on material and also on pressure, and mainly exists only for part load operation. To overcome this problem, at least one interstage desuperheater may be operatively arranged between the superheaters (or heat exchangers) of HRSG 202. For example, interstage desuperheater 234 may be provided between superheaters A and B of HRSG 202, insterstage desuperheater 236 may be provided between superheaters B and C of HRSG 202, and/or interstage desuperheater 235 may be provided between superheaters A' and B' of HRSG 202. Desuperheating, sometimes called attemperation or steam conditioning, is the reduction of steam temperature. Desuperheaters described in this disclosure may include any now known desuperheaters (e.g., a water injection) or future developed equivalents.

Depending on the arrangement of the power plant, additional desuperheaters, such as, for example, 234, 235 and 236 may be included for general temperature control. HRSG 202 shown in FIG. 3 is shown with various desuperheaters, but it should be appreciated that the additional desuperheaters may be optional and can include any number of desuperheaters based on specifications that the generating system requires to operate. In an example embodiment, there are a number of desuperheaters operatively arranged to maintain the temperature of the steam in steam exhaust 204 going to HP turbine 206 and the steam exhaust going to IP turbine 228.

In addition to desuperheater 224 along the live steam flow between HRSG 202 and HP turbine 206, a desuperheater 226 can be operatively arranged along the reheat steam flow between HRSG 202 and IP turbine 228.

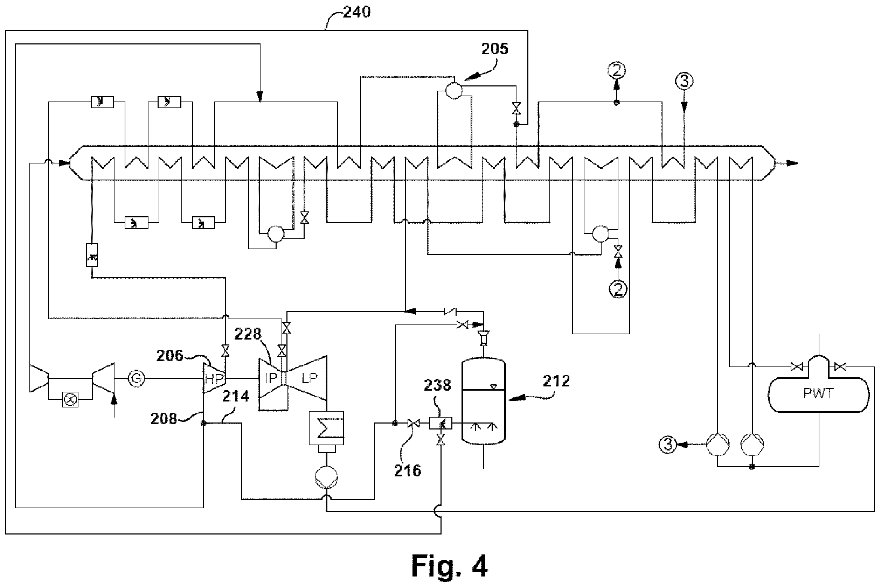

FIG. 4 is a schematic of an embodiment of the present disclosure having a desuperheater 238 configured after inlet valve 216 of storage system 212. In an example embodiment, desuperheater 238 is water injection 238. In an example embodiment, portion 214 of first steam exhaust 208 from HP turbine 206 is mixed with water from IP system 205 of the HRSG. IP system 205 in general may include a drum with everything upstream of the IP drum being water, and downstream of the IP drum being steam. In an embodiment, line 240 is a water connection from IP system 205 to desuperheater 238 in order for desuperheater 238 to reduce the temperature of steam 214. In an example embodiment, water from IP system 205 is used for desuperheating, however a person having ordinary skill in the art will appreciate that it can be a water source other than from IP system 205 with suitable parameters.

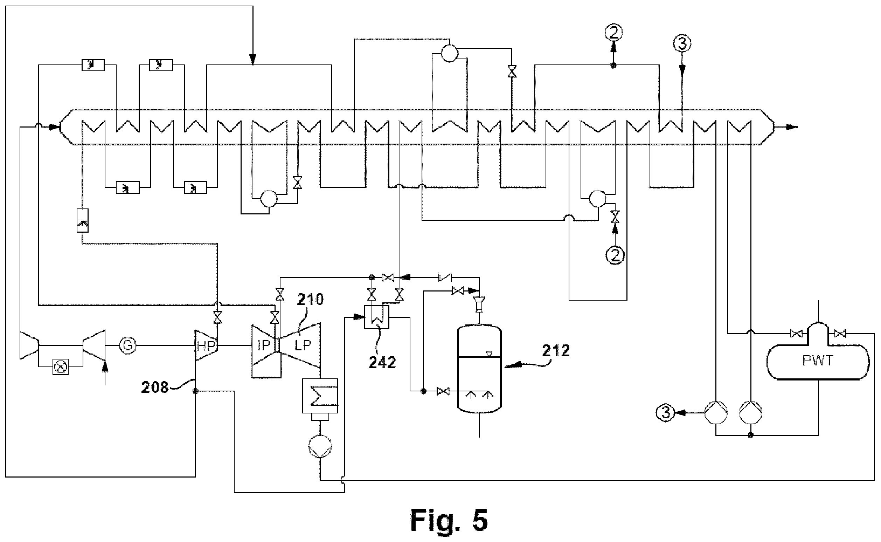

FIG. 5 is a schematic of an embodiment of the present disclosure having an extra heat exchanger 242 for use when long-term storage may be desired. When using first steam exhaust 208 to charge storage system 212, first steam exhaust 208 may still be approximately 150 K superheated. This thermal energy of the superheated first steam exhaust can be used efficiently by installing a steam-steam-heat exchanger 242 between first steam exhaust 208 and LP turbine 210.

With embodiments of the present disclosure, the storage can add some percent of additional power (for a discrete period, depending on the storage size and number of storage tanks) as well as reduce the minimum load by some percent. The load increase happens when discharging the storage. During charging, the plant load is reduced.

Advantages of the embodiments of the present disclosure include extending the operating range of combined cycle power plants, and enable quick reaction to system demands. Integration of the steam storage into a combined cycle gas turbine plant means that during charging of the steam storage system, the power plant will generate less electric power, but thermal power is sent to the storage system. During discharging of stored steam from within the storage system, the thermal power is released and the electric power output increases. Charging at any load leads to a reduced plant load while discharging at any load results in a plant load increase higher than the load would be originally.

Embodiments of the present disclosure enable the power plant to quickly react to system demands. When delivering system services, e.g. primary or secondary frequency control, the service is normally required for a distinct period of time. For a power plant, this means it has to react quickly, change the load point and run after a short period, for example 15 minutes, back to the prior load. The possibility with such storage is that the operation of the power plant is not so much influenced, but parts of the service are delivered from the storage. Also, the power plant can offer a greater range of system services.

Another advantage of the present disclosure is that the electrical power output can be changed during charging and discharging without impacting the operation of the gas turbine. It also adds a certain surplus on the ramp rate, i.e., the rate that a generator changes its output. If there is now some additional power that can be added to the existing ramp rate, a power plant can offer a higher capacity of such a system serviced. The steam storage has a faster reaction time than battery storage.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. "Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about," "approximately" and "substantially," are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise. "Approximately" as applied to a particular value of a range applies to both values, and unless otherwise dependent on the precision of the instrument measuring the value, may indicate +/- 10% of the stated value(s).

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the disclosure in the form disclosed. Many modifications and variations will be apparent to those of ordinary skill in the art without departing from the scope and spirit of the disclosure. The embodiment was chosen and described in order to best explain the principles of the disclosure and the practical application, and to enable others of ordinary skill in the art to understand the disclosure for various embodiments with various modifications as are suited to the particular use contemplated.

Various aspects and embodiments of the present invention are defined by the following clauses:
1. A steam turbine system, comprising:
   a steam source for generating a steam flow;
   a high-pressure turbine providing a first steam exhaust;
   a low-pressure turbine fluidly coupled to the high-pressure turbine;
   a steam storage system having an inlet for receiving a portion of the first steam exhaust from the high-pressure steam turbine and storing in the steam storage system, the steam storage system having an output with a pressure relief valve for discharging a second steam exhaust to the low-pressure turbine.
2. The steam turbine system of clause 1, wherein the steam source includes a first superheater and a second superheater, the steam turbine system further comprising an interstage desuperheater operatively arranged between the first and second superheaters.
3. The steam turbine system of clause 1, further comprising a desuperheater between the first exhaust of the high-pressure steam turbine and the inlet of the steam storage system.
4. The steam turbine system of clause 1, further comprising a heat exchanger operatively coupled between the first exhaust of the high-pressure steam turbine and the inlet of the steam storage system.
5. The steam turbine system of clause 4, wherein the steam source is a heat recovery system generator (HRSG) having a low-pressure system, and the heat exchanger is configured to output into LP steam from the low-pressure system of the HRSG.
6. The steam turbine system of clause 1, further comprising an intermediate pressure steam turbine fluidly coupled to the high-pressure steam turbine and the low-pressure steam turbine.
7. The steam turbine system of clause 6, further comprising a second desuperheater operatively coupled between the steam source and the intermediate pressure steam turbine.
8. The steam turbine system of clause 7, wherein the steam source is an HRSG having an intermediate pressure system, and the second desuperheater is a water injection operatively coupled to the intermediate pressure system and configured to control the temperature of the inlet to the intermediate pressure steam turbine.
9. The steam turbine system of clause 1, wherein the steam source is a heat recovery steam generator (HRSG) and is operatively coupled to a gas turbine.
10. The steam turbine system of clause 9, wherein there are a plurality of HRSGs as steam sources operatively coupled to a plurality of gas turbines, wherein the plurality of HRSGs generate the steam flow.
11. The steam turbine system of clause 1, wherein the steam storage system is a steam storage tank.
12. The steam turbine system of clause 1, wherein the steam storage system includes a plurality of steam storage tanks.
13. A power plant, comprising:
   a steam turbine system, having:
      a heat recovery steam generator (HRSG) for generating a steam flow;
      a high-pressure turbine providing a first steam exhaust;
   a low-pressure turbine fluidly coupled to the high-pressure turbine; and,
      a steam storage system having an inlet for receiving a portion of the first steam exhaust from the high-pressure steam turbine and storing a storage steam, the steam storage system having an output with a pressure relief valve for discharging a second steam exhaust to the low pressure turbine.
14. The power plant of clause 13, wherein the HRSG includes a first superheater and a second superheater, the steam turbine system further comprising an interstage desuperheater operatively arranged between the first and second superheaters.
15. The power plant of clause 13, further comprising a gas turbine operatively coupled to the HRSG.
16. The power plant of clause 13, further comprising an intermediate pressure turbine.
17. The power plant of clause 13, further comprising a second desuperheater between the HRSG and the intermediate pressure turbine.
18. A method, comprising:
   feeding a first portion of a first exhaust steam from a high-pressure steam turbine to a steam storage system, and feeding a second portion of the steam to an HRSG;
   storing the first portion of the steam in the steam storage system;
   outputting, with a pressure relief valve, a steam flow from the steam storage system to a low-pressure steam turbine; and,
   controlling the temperature of the exhaust steam from the steam storage system by adding superheated steam from the first steam exhaust, wherein the steam storage discharges superheated steam to the low steam turbine.
19. The method of clause 18, further comprising running a combined cycle power plant in part load, and providing an interstage desuperheater between a first superheater and a second superheater of the HRSG.
20. The method of clause 18, further comprising providing a heat exchanger configured between the high-pressure steam turbine and the inlet of the steam storage system.

## Claims

1. A steam turbine system (14, 200), comprising:
a steam source for generating a steam flow;
a high-pressure turbine (16, 206) providing a first steam exhaust (208);
a low-pressure turbine (18, 210) fluidly coupled to the high-pressure turbine (206);
a steam storage system (212) having an inlet (216) for receiving a portion (214) of the first steam exhaust (208) from the high-pressure steam turbine (16, 206) and storing in the steam storage system (212), the steam storage system (212) having an output with a pressure relief valve for discharging a second steam exhaust (222) to the low-pressure turbine (18, 210).

2. The steam turbine system (14, 200) of claim 1, wherein the steam source includes a first superheater and a second superheater, the steam turbine system (200) further comprising an interstage desuperheater (234, 235, 236) operatively arranged between the first and second superheaters.

3. The steam turbine system (14, 200) of claim 1 or claim 2, further comprising a desuperheater (238) between the first exhaust of the high-pressure steam turbine (16, 206) and the inlet (216) of the steam storage system (212).

4. The steam turbine system (14, 200) of any preceding claim, further comprising a heat exchanger (242), operatively coupled between the first exhaust of the high-pressure steam turbine (16, 206) and the inlet (216) of the steam storage system (212).

5. The steam turbine system (14, 200) of claim 4, wherein the steam source is a heat recovery system generator (HRSG) (202) having a low-pressure system (203), and the heat exchanger (242) is configured to output into LP steam from the low-pressure system (203) of the HRSG (202).

6. The steam turbine system (14, 200) of any preceding claim, further comprising an intermediate pressure steam turbine (17, 228) fluidly coupled to the high-pressure steam turbine (16, 206) and the low-pressure steam turbine (18, 210).

7. The steam turbine system (14, 200) of claim 6, further comprising a second desuperheater (226) operatively coupled between the steam source and the intermediate pressure steam turbine (17, 228).

8. The steam turbine system (14, 200) of claim 7, wherein the steam source is an HRSG (202) having an intermediate pressure system (205), and the second desuperheater (226) is a water injection (238) operatively coupled to the intermediate pressure system (205) and configured to control the temperature of the inlet to the intermediate pressure steam turbine (17, 228).

9. The steam turbine system (14, 200) of any preceding claim, wherein the steam source is a heat recovery steam generator (HRSG) (202) and is operatively coupled to a gas turbine (108).

10. The steam turbine system (14, 200) of claim 9, wherein there are a plurality of HRSGs (202) as steam sources operatively coupled to a plurality of gas turbines (108), wherein the plurality of HRSGs (202) generate the steam flow.

11. The steam turbine system (14, 200) of any preceding claim, wherein the steam storage system (212) is a steam storage tank.

12. The steam turbine system (14, 200) of any preceding claim, wherein the steam storage system (212) includes a plurality of steam storage tanks.

13. A power plant (100), comprising:
a steam turbine system (14, 200), having:
a heat recovery steam generator (HRSG) (202) for generating a steam flow;
a high-pressure turbine (16, 206) providing a first steam exhaust (208);
a low-pressure turbine (18, 210) fluidly coupled to the high-pressure turbine (16, 206); and,
a steam storage system (212) having an inlet (216) for receiving a portion (214) of the first steam exhaust (208) from the high-pressure steam turbine (16, 206) and storing a storage steam, the steam storage system (212) having an output with a pressure relief valve for discharging a second steam exhaust (222) to the low-pressure turbine (18, 210).

14. The power plant (100) of claim 13, wherein the HRSG (202) includes a first superheater and a second superheater, the steam turbine system (200) further comprising an interstage desuperheater (234, 235, 236) operatively arranged between the first and second superheaters.

15. The power plant (100) of claim 13 or claim 14, further comprising a gas turbine (108) operatively coupled to the HRSG (202).
